# EUROPEAN PATENT SPECIFICATION

(11) **EP 2 672 748 B1**
(45) Date of publication and mention of the grant of the patent: **05.04.2017**
(21) Application number: 11864701.5
(22) Date of filing: 19.09.2011
(51) Int. Cl.: H04L 12/801, H04W 28/02, H04W 52/02, G06Q 50/06

(54) **LOAD PREDICTION METHOD, APPARATUS AND ENERGY-SAVING CONTROL COMMUNICATION SYSTEM**
LASTVORHERSAGEVERFAHREN, VORRICHTUNG UND ENERGIESPARENDES STEUERKOMMUNIKATIONSSYSTEM
PROCÉDÉ DE PRÉDICTION DE CHARGE, APPAREIL ET SYSTÈME DE COMMUNICATION À COMMANDE D'ÉCONOMIE D'ÉNERGIE

(43) Date of publication of application: 11.12.2013
(73) Proprietor: Huawei Technologies Co., Ltd., Longgang District Shenzhen, Guangdong 518129 (CN)
(72) Inventor: ZHOU, Jianhua, Shenzhen, Guangdong 518129 (CN)
(74) Representative: Pfenning, Meinig & Partner mbB
(86) International application number: PCT/CN2011/079839
(87) International publication number: WO 2012/149749

(56) References cited:
- EP-A1- 2 117 099
- EP-A1- 2 296 394
- EP-A1- 2 296 394
- WO-A1-2010/077193
- CN-A- 1 627 673
- CN-A- 1 968 490
- GB-A- 2 477 198
- US-A1- 2007 171 996
- US-A1- 2011 222 418

## Description

### TECHNICAL FIELD

The present disclosure relates to the field of energy-saving technologies, and in particular, to a load prediction method, an apparatus, and an energy-saving control communications system.

### BACKGROUND

Most of devices (for example, network elements) on a current communications network are configured according to the service volume at peak traffic hours. These devices are in a light-load status when they operate at normal hours, without playing the best performance. This leads to relatively large redundancy and energy waste. To reduce the energy waste, a dynamic power manager (dynamic power manager, DPM) is mostly adopted in the prior art to implement energy-saving control.

Functions and a processing procedure of the DPM are as follows, with Step 1 to Step 5 being executed cyclically:
Step 1: Monitor load borne by a processing resource and corresponding power consumption.
Step 2: Perform statistical analysis for local load and energy consumption, and predict load and resources in a next period.
Step 3: Calculate the required performance volume of processing resources according to the predicted load volume.
Step 4: Determine, according to an existing energy-saving policy and the required performance volume of the processing resources upon prediction, a corresponding working mode (or a low power consumption mode) of the processing resources in the next period.
Step 5: Deliver a switch command to switch the processing resources to the corresponding working mode before the next period arrives.

The DPM adjusts the working mode of the processing resources for a condition of future service load, and therefore, prediction needs to be performed for the future service load. If an error of the prediction is beyond a certain tolerable range, the devices cannot process the service load in time due to a shortage of performance provided by the processing resources; or there is a surplus of performance provided by the processing resources, and the devices are in a working status of relatively high energy consumption, and this leads to a poor effect in energy saving.

In the process of implementing the present disclosure, the inventor finds, in a DPM of the prior art, the problem of low accuracy in load prediction and an unsatisfactory effect in energy saving.
EP2296394A discloses a base station which is operable, in concert with other base stations within a group, to support wireless communications with user equipment. The base station is adapted to determine the loads of each of the neighboring base stations within a neighboring cluster or group, and is able to adjust its coverage area to cause that communications loading to be rebalanced.

### SUMMARY

Embodiments of the present disclosure provide a load prediction method, an apparatus, and an energy-saving control communications system as defined in the presently independent claims, so as to improve accuracy in load prediction and achieve a better effect in energy saving.

To achieve the preceding objectives, the embodiments of the present disclosure adopt the following technical solutions:

A load prediction method includes:
acquiring load information of a local load entity;
acquiring load information of a load entity adjacent to the local load entity; and
predicting load of the local load entity in a next period according to the load information of the local load entity and the load information of the load entity adjacent to the local load entity.

A dynamic power manager includes:
a first acquiring unit, configured to acquire load information of a local load entity;
a second acquiring unit, configured to acquire load information of a load entity adjacent to the local load entity; and
a predicting unit, configured to predict load of the local load entity in a next period according to the load information of the local load entity and the load information of the load entity adjacent to the local load entity.

An energy-saving control communications system includes: an OM (operation and maintenance, operation and maintenance terminal) and a DPM, where:
the DPM is configured to acquire load information of a local load entity; acquire load information of a load entity adjacent to the locah load entity; and predict load of the local load entity in a next period according to the load information of the local load entity and the load information of the load entity adjacent to the local load entity; and
the OM is configured to perform neighbor identification configuration for a DPM as well as establishment, releasing and refreshing, and maintenance for a neighbor route message.

According to the embodiments of the present disclosure described in the preceding technical solutions, during prediction of network device load, predictive calculation is performed according to load information of a local load entity and load information of a load entity adjacent to the local load entity so as to predict load of the local load entity in a next period, wherein the load entity adjacent to the local load entity comprises: a mutual-aid load entity, an upper-layer load entity, and a lower-layer load entity, and the acquiring load information of a load entity adjacent to the local load entity comprises: receiving a mutual-aid neighbor notification message sent by a mutual-aid load entity in a load entity dynamic power manager DPM address coding table, and obtaining load information of the mutual-aid load entity by processing the mutual-aid neighbor notification message, wherein the load information comprises: actual current load, predicted load, a prediction error, and time information; receiving an upper-layer neighbor notification message that is sent by an upper-layer load entity in the load entity DPM address coding table and corresponds to the local load entity, and obtaining load information of the upper-layer load entity by processing the upper-layer neighbor notification message; receiving a lower-layer neighbor notification message that is sent by a lower-layer load entity in the load entity DPM address coding table and corresponds to the local load entity, and obtaining load information of the lower-layer load entity by processing the lower-layer neighbor notification message; and obtaining the load information of the load entity adjacent to the local load entity by summarizing the load information of the mutual-aid load entity, the load information of the upper-layer load entity, and the load information of the lower-layer load entity. The method, the apparatus, and the system for predicting load of a network element according to the technical solutions of the present disclosure can improve accuracy in load prediction, allow a communications device to trace service load changes with better performance, and yield a more satisfactory effect in energy saving.

### BRIEF DESCRIPTION OF DRAWINGS

FIG. 1 is a schematic diagram of a stratified communications network;
FIG. 2 is a schematic diagram of mutual relationships between network elements;
FIG. 3 is a flowchart of a load prediction method according to Embodiment 1 of the present disclosure;
FIG. 4 is a structural diagram of a dynamic power manager according to Embodiment 1 of the present disclosure;
FIG. 5 is a structural diagram of an energy-saving control communications system according to Embodiment 1 of the present disclosure;
FIG. 6 is a schematic diagram of transmission of neighbor notification messages between network elements;
FIG. 7 is a flowchart of a load prediction method according to Embodiment 2 of the present disclosure;
FIG. 8 is a schematic flowchart of processing neighbor information according to an embodiment of the present disclosure;
FIG. 9 is a schematic flowchart of correcting predicted load of a network element according to an embodiment of the present disclosure;
FIG. 10 is a structural diagram of a dynamic power manager according to Embodiment 3 of the present disclosure; and
FIG. 11 is a schematic structural diagram of a DPM apparatus according to Embodiment 3 of the present disclosure.

### DESCRIPTION OF EMBODIMENTS

With reference to the accompanying drawings, the following describes in detail a load prediction method, an apparatus, and an energy-saving control communications system in embodiments of the present disclosure. It should be understood that the embodiments described here are used only to clarify the present disclosure rather than limiting the present disclosure.

A load entity described in the embodiments of the present disclosure includes a DPM. It may be a load entity that is a network element on a communications network, a subsystem of a network element, a board of a network element, or the like. Most of the embodiments of the present disclosure take the network element as an example to describe implementation manners in the embodiments of the present disclosure. Identical to taking the network element as an example to describe principles of the embodiments of the present disclosure, the embodiments of the present disclosure may also take the subsystem of the network element, the board of the network element, or the like as an example.

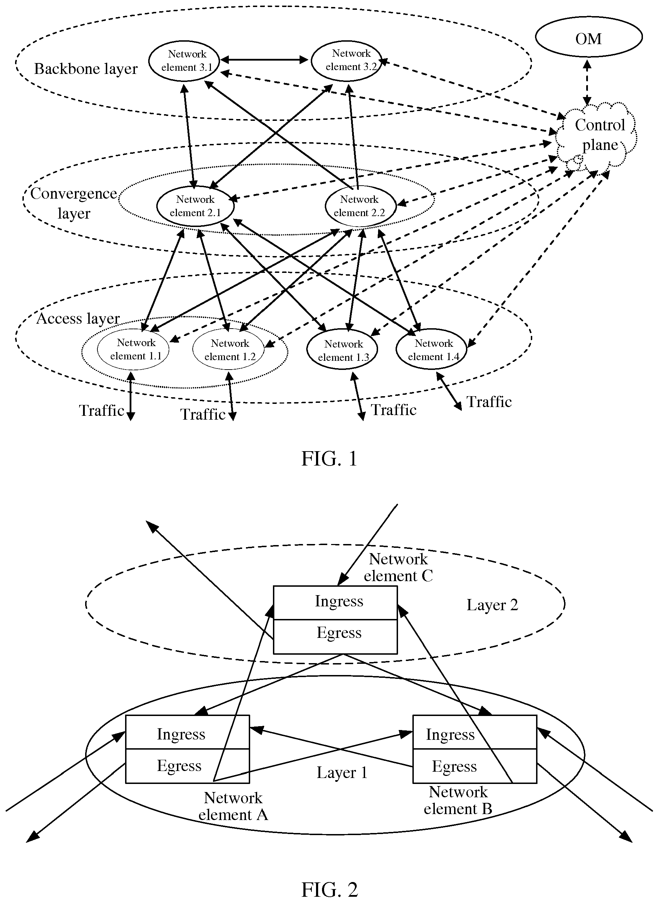

Refer to FIG. 1. Two planes exist on the communications network: a service flow plane and a control plane. Channels for bearing services between network elements constitute the service plane, which are shown by the bi-directional solid lines between the network elements in FIG. 1 and are used to bear services, such as, voice, video, and data of a user. Information paths between each network element and a network management system constitute the control plane, which are shown by the bi-directional dashed lines between the network elements and the OM in FIG. 1 and are used to bear maintenance and management information, signaling, and other information of the communications network. Each two network elements have an upper/lower-layer neighbor relationship between each other in the service plane, while they are peer entities in the control plane. As shown in FIG. 1, the service plane may be divided, according to a networking topology structure and a network element type, into multiple layers, such as a backbone layer, a convergence layer, and an access layer.

Refer to FIG. 2. Service traffic load of the communications network runs layer by layer through each network element at each layer of the network. Corresponding to the service traffic, a mutual relationship between each two network elements is an upper/lower layer relationship (where network elements are at different network layers) or an equal-layer mutual-aid relationship (where network elements are at a same network layer). These two relationships are defined as neighbor relationships between network elements in this specification. For example, in FIG. 2, a network element A and a network element B is a mutual-aid group; and from the perspective of the network element A, a network element C is at a lower layer in an Egress (egress) direction of the network element A, and concurrently, the network element C is at an upper layer in an Ingress (ingress) direction of the network element A.

As the network elements are mutually connected, service load or a working status of a network element may have a certain impact on the future service load volume of a lower-layer network that is connected to the network element. Making the most of service load and working status information of an adjacent network element can significantly minimize an error in service load prediction of a local network element.

Based on the preceding fact, the present disclosure provides a new technical solution to a DPM architecture and a DPM processing procedure. Functional modules that mutually transmit service load volume, a working status, and other information are added between DPM modules of the network elements. The involvement of load information of upper-layer and equal-layer network elements in local service load prediction will significantly improve prediction accuracy, thereby solving or alleviating the problem that exists in the prior art.

### Embodiment 1

A load entity in the embodiment may be an entity or may also be a network element on a communications network, a subsystem of a network element, a board of a network element, or the like.

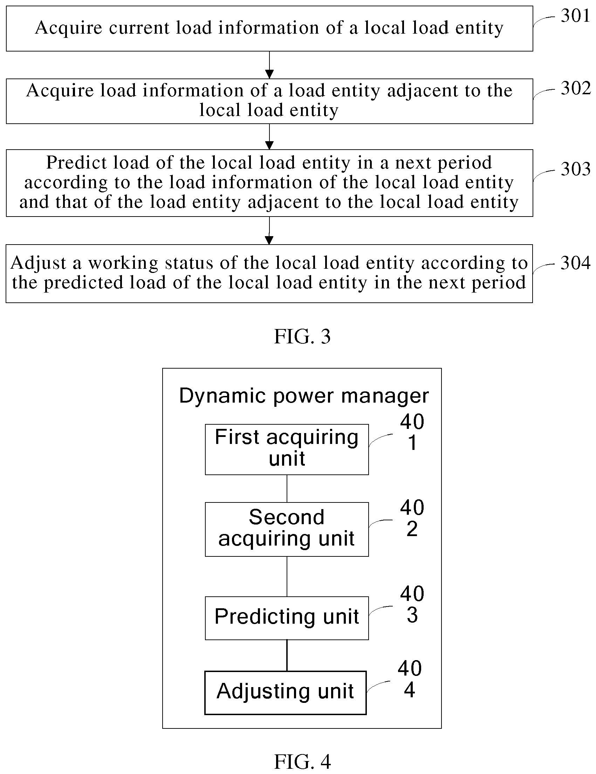

The embodiment provides a load prediction method, as shown in FIG. 3, including:
301. Acquire load information of a local load entity.
302. Acquire load information of a load entity adjacent to the local load entity.
303. Predict load of the local load entity in a next period according to the load information of the local load entity and the load information of the load entity adjacent to the local load entity.
304. Adjust a working status of the local load entity according to the predicted load of the local load entity in the next period.

The embodiment of the present disclosure may be executed by a load prediction apparatus, for example, a dynamic power manager.

According to the method provided in the embodiment, during prediction of network device load, predictive calculation is performed according to load information of a local device and load information of a device adjacent to the local device so as to predict load of the local device in a next period. This can improve accuracy in load prediction and achieve a better effect in energy saving.

To implement the preceding load prediction method, the embodiment provides a dynamic power manager. As shown in FIG. 4, the dynamic power manager includes: a first acquiring unit 401, a second acquiring unit 402, a predicting unit 403, and an adjusting unit 404.

The first acquiring unit 401 is configured to acquire load information of a local load entity.

The second acquiring unit 402 is configured to acquire load information of a load entity adjacent to the local load entity.

The predicting unit 403 is configured to predict load of the local load entity in a next period according to the load information of the local load entity and the load information of the load entity adjacent to the local load entity.

The adjusting unit 404 is configured to adjust a working status of the local load entity according to the predicted load of the local load entity in the next period.

According to the dynamic power manager provided in the embodiment, during prediction of network device load, a first acquiring unit acquires load information of a local load entity, a second acquiring unit acquires load information of an adjacent load entity, and a predicting unit performs prediction according to the acquired load information. This may improve load prediction accuracy and achieve an energy-saving objective.

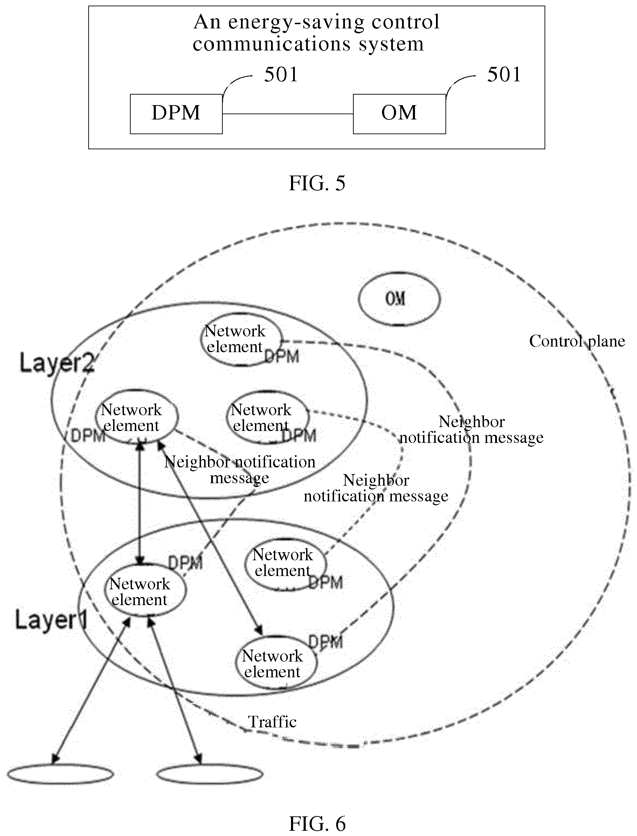

Refer to FIG. 5. The embodiment further provides an energy-saving control communications system, including a DPM 501 and an OM (operation and maintenance terminal) 501.

The DPM 501 is configured to acquire load information of a local load entity; acquire load information of a load entity adjacent to the local load entity; and predict load of the local load entity in a next period according to the load information of the local load entity and the load information of the load entity adjacent to the local load entity.

The OM 502 is configured to perform neighbor identification configuration for a DPM as well as establishment, releasing and refreshing, and maintenance for a neighbor route message.

Specifically, the DPM may be located in the load entity. The load entity is a network element on the communications network, a subsystem of a network element, a board of a network element, or the like.

According to the energy-saving control communications system that is provided in the embodiment and includes a DPM and an OM, more accurate prediction is obtained according to load information of a local load entity and load information of an adjacent load entity, allowing a communications device to trace service load changes with better performance, thereby yielding a more satisfactory effect in energy saving.

### Embodiment 2

The embodiment takes a network element on a communications network as a load entity to describe in detail implementation manners of the embodiment. In addition, the load entity may also be a subsystem of a network element, a board of a network element, or the like.

Refer to FIG. 6. In the embodiment of the present disclosure, DPM modules are disposed locally on network elements in a distributed manner, and a DPM module of each network element completes a dynamic energy saving function under management of an OM. Each pair of DPM module neighbors quickly notify each other of service load volume, a working status, and other information in a control plane, as shown by dashed lines in FIG. 6.

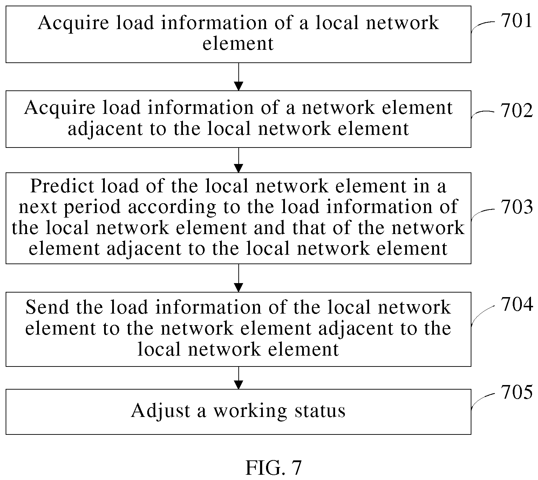

The embodiment of the present disclosure further provides a method for predicting network element load, as shown in FIG. 7, including:
701. Acquire load information of a local network element.

Specifically, there are multiple methods for acquiring the load information of the local network element. One of the methods for acquiring the load information of the local network element is provided here, which may mainly include the following steps:
collecting current service load, and chronologically forming a sequence of actual values of the service load;
predicting service load at a next moment according to a local service prediction algorithm, and forming a curve of predicted service load;
chronologically forming an error value sequence for error values, where a prediction error at a certain moment T = the difference between a predicted value of service load at the T moment and an actual value of the service load at the T moment; and
obtaining an average prediction error by selecting absolute values of error values at N (for example, N = 30) moments before a current moment, adding them together, and averaging them, where the average prediction error is taken as an index to measure accuracy of a local prediction method.

In view of the above, the load information in this specification includes the following content:
A. a service load sequence obtained from actual measurement;
B. a service load sequence obtained from prediction;
C. an error sequence or an error index; and
D. time information.

A network element receives service load from upper- and lower-layer neighbors in an Ingress (ingress) direction and sends the processed service load to the upper- and lower-layer neighboring network elements in an Egress (egress) direction. Therefore, the processing in the preceding steps needs to be performed both in the Ingress and Egress path directions so as to form a series of prediction results. A prediction result in the Egress direction needs to be sent to a corresponding neighbor through a subsequent neighbor notification function so as to take part in a process for information processing and service load prediction performed by a DPM of a neighboring service network element; and a prediction result in the Ingress direction needs to take part in a local process for subsequent load prediction.

702. Acquire load information of a network element adjacent to the local network element.

Specifically, the network element adjacent to the local network element includes a mutual-aid network element, an upper-layer network element, and a lower-layer network element, and the acquiring load information of a network element adjacent to the local network element includes:
receiving a mutual-aid neighbor notification message sent by a mutual-aid network element in a network element dynamic power manager DPM address coding table, and obtaining load information of the mutual-aid network element by processing the mutual-aid neighbor notification message;
receiving an upper-layer neighbor notification message that is sent by an upper-layer network element in the network element DPM address coding table and corresponds to the local network element, and obtaining load information of the upper-layer network element by processing the upper-layer neighbor notification message;
receiving a lower-layer neighbor notification message that is sent by a lower-layer network element in the network element DPM address coding table and corresponds to the local network element, and obtaining load information of the lower-layer network element by processing the lower-layer neighbor notification message; and
obtaining the load information of the network element adjacent to the local network element by summarizing the load information of the mutual-aid network element, the load information of the upper-layer network element, and the load information of the lower-layer network element.

Next, definitions of the neighbor notification messages and sending procedures are as follows:

The content of a neighbor notification message specifies but is not limited to: a source address, a destination address, a current time point, current service load, a current working status, predicted service load, a predicted working status, start and end time points of a corresponding time period.

Types of the neighbor notification messages are: a mutual-aid neighbor message and an upper/lower-layer neighbor notification message.

Except for address and time information, content of a mutual-aid neighbor notification message includes: the total of current service load of all Ingresses of a network element, the total of predicted service load of all Ingresses of the network element, a current working status of the network element, a predicted working status of the network element, and start and end time points of the corresponding time period.

A mutual-aid neighbor notification message is sent to all mutual-aid neighbors of the local network element in a broadcast manner, where all the mutual-aid neighbors are recorded in a neighbor route information table.

Except for address and time information, content of an upper/lower-layer notification message includes: current service load in an Egress direction, predicted service load in the Egress direction, a current working status of the network element, a predicted working status of the network element, and start and end time points of the corresponding time period.

An upper/lower-layer neighbor notification message is point-to-point, and the DPM of the network element needs to generate a unique upper/lower-layer neighbor notification message for each neighbor that is recorded in a neighbor route information table and is at the Egress direction, and send the unique message to the neighbor.

Specifically, steps in a neighbor notification procedure are as follows:
acquiring a neighbor type and address from a neighbor routing address table;
acquiring information generated in the relevant procedure, and encapsulating, according to the preceding content, a neighbor notification message corresponding to the neighbor type; and
sending a neighbor notification message according to each address in a neighbor routing address table.

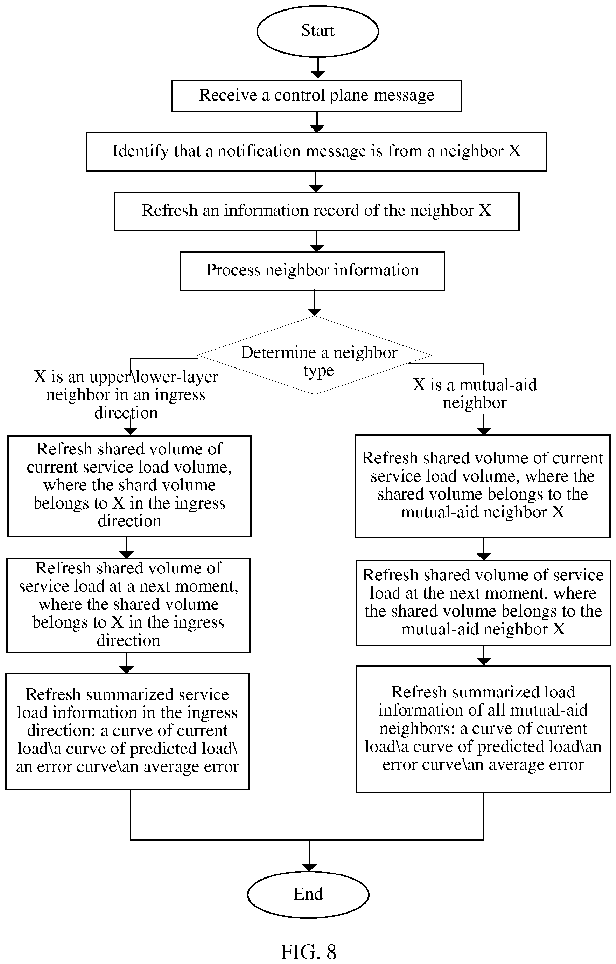

Refer to FIG. 8. In a procedure for neighbor information processing, a received neighbor notification is processed in the ingress direction according to a neighbor type, and the following types of information are obtained for subsequent service load prediction performed by the DPM of a network element. Service load information includes but is not limited to: service load at a current moment, predicted service load at a next moment T, a working status, start and end time, and so on.

Service load information of each neighbor in the Ingress direction;
summarized service load information of all the neighbors in the Ingress direction;
service load information of each mutual-aid neighbor; and
summarized service load information of all the mutual-aid neighbors.

Specifically, as shown in FIG. 8, a control plane message is received; a notification message from a neighbor X is identified; an information record of the neighbor X is refreshed according to the notification message, where the information record includes current load, predicted load, a working status, and start and end time; a neighbor type (an upper/lower-layer neighbor or a mutual-aid neighbor) is determined by processing neighbor information; and corresponding processing is performed.

A network element DPM address coding table is applied in the embodiment, and a method for establishing the network element DPM address coding table is:
storing an address of one or more mutual-aid network elements in a corresponding position in the network element DPM address coding table, where the mutual-aid network element is a network element, which is located at a same layer as the local network element and has a service association with the local network element;
storing an address of one or more upper-layer network elements in a corresponding position in the network element DPM address coding table, where the upper-layer network element is a network element at an upper network layer, which is located at a different layer from the local network element and has a service association with the local network element; and
storing an address of one or more lower-layer network elements in a corresponding position in the network element DPM address coding table, where the lower-layer network element is a network element at a lower network layer, which is located at a different layer from the local network element and has a service association with the local network element.

Further, the network element DPM address coding table has update and refresh functions. It may be updated according to address information, sent by an OM, of the network element adjacent to the local network element; or it may also accept scheduled refresh performed by an OM.

The network management system OM continues to have functions, such as recording/registering each DPM, delivering an energy-saving policy, enabling/disabling each DPM, querying for a status, and processing an abnormality report from each DPM. Except for these functions, a functional module unit for grouping routes of DPMs of network elements is further added into the network management system OM, and this unit needs to perform, according to a network topology structure, neighbor identification configuration for a DPM of a network element as well as establishment, releasing and refreshing, and maintenance for a neighbor notification message route, and other work. There are three types of neighbor notification message routes that correspond to three types of network element neighbors: an upper-layer network element, a lower-layer network element, and a mutual-aid network element. There may be multiple neighboring network elements of each type.

Refer to FIG. 2. Each network element receives service load from upper- and lower-layer neighbors in the Ingress direction and sends the processed service load to the upper- and lower-layer neighboring network elements in the Egress (egress) direction. Addresses of the upper- and lower-layer neighbors need to be grouped according to the Ingress and Egress directions so as to form a neighbor notification route list, thereby facilitating management and application. Each Ingress/Egress address corresponds to an Ingress/Egress direction, and this means a connected network element neighbor. The following table is an example of the network element DPM address coding table.

| Local address of network element N | Address code of local network element | | |
|---|---|---|---|
| Ingress | | | |
| Address of upper-layer network element | Address code of upper-layer network element 1 | Address code of upper-layer network element 2 | Address code of upper-layer network element N |
| Address of lower-layer network element | Address code of lower-layer network element 1 | Address code of lower-layer network element 2 | Address code of lower-layer network element N |
| Egress | | | |
| Address of upper-layer network element | Address code of upper-layer network element 1 | Address code of upper-layer network element 2 | Address code of upper-layer network element N |
| Address of lower-layer network element | Address code of lower-layer network element 1 | Address code of lower-layer network element 2 | Address code of lower-layer network element N |
| Address of mutual-aid network element | Address code of mutual-aid network element 1 | Address code of mutual-aid network element 2 | Address code of mutual-aid network element N |
| | Load sharing proportion | Empirical value of trend difference | |

The network management system OM needs to send corresponding neighbor notification route information to a DPM of a network element in the following cases:
When the network management system OM obtains a notification for enabling registration of a DPM of a certain network element, the neighbor notification route information needs to be sent to the DPM of the network element.

When the network management system OM obtains de-registration (an operation stop) of a DPM of a certain network element, the neighbor notification route list needs to be re-calculated and sent to a DPM of an affected neighboring network element.

Scheduled refreshing is performed:
Route information in a neighbor notification message of the DPM of the network element is established and refreshed in a scheduled manner under management of the network management system OM.

When the DPM module of the network element starts to operate and registers with the network management system OM, the network management system OM sends the neighbor notification route information to the DPM.

The network management system OM refreshes the neighbor notification route information in a scheduled manner.

703. Predict load of the local network element in a next period according to the load information of the local network element and the load information of the network element adjacent to the local network element.

There are multiple methods for predicting service load of the local network element after neighbor service notification information is introduced. Methods provided in the embodiment are:
Method 1
   Based on the fact that service traffic runs layer by layer, the total predicted service volume is taken as local Ingress service load volume in the next period, where the total predicted service volume is obtained by adding together predicted service volume in the next period of all neighbors in the Ingress direction in the network element DPM address coding table.
   Total Ingress-direction service load in the next period = Service load of Ingress neighbor 1 in the next period + Service load of Ingress neighbor 2 in the next period + ... + Service load of Ingress neighbor N in the next period T.
Method 2
   In the preceding procedure for neighbor information processing, an average error of errors of summarized predicted service load in the Ingress direction has been calculated and obtained, and it is called ΔD1.
   In the process for collecting and statistically analyzing local service load of the DPM of the network element, an average error in the local prediction of Ingress service load is obtained and called ΔD2.
   If (ΔD2 > ΔD1), service load of the local network element in the next period = summarized service load at a service moment T in the Ingress direction.
   If (ΔD2 < ΔD1), Ingress service load of the local network element in the next period = locally predicted Ingress service load in the next period.
Method 3

With reference to average errors ΔD1 and ΔD2, the OM sets weight factors A and B through a DPM maintenance interface of a network element.

Alternatively, the weight factors A and B are obtained through calculation according to formulas A = ΔD2/(ΔD2 + ΔD1) and B = ΔD1/(ΔD2 + ΔD1), and then Ingress-direction service load of the local network element in the next period is calculated according to the following formula:

Ingress service load of the local network element in the next period = A × summarized Ingress-layer service load in the next period + B × locally predicted Ingress service load in the next period.

During network planning, mutual-aid network elements are deployed to share load and a service sharing policy is defined, for example, in a service policy, a maximum service sharing proportion/a maximum service load difference, or other maximum values in a mutual-aid network element group are defined by the OM or defined according to empirical data. Therefore, a service load trend from a mutual-aid network element will have a relatively good correction impact on prediction of service load of the local network element.

In practice, after load of the local network element in the next period is predicted, to make the predicted load more accurate, the predicted load of the local network element in the next period of time is further corrected according to load of an adjacent network element in the embodiment.

Objectives of load correction are: (1) preventing a relatively large offset from occurring in service prediction of the local network element; and (2) interacting with a mutual-aid network element to quickly find an abnormal change in service load.

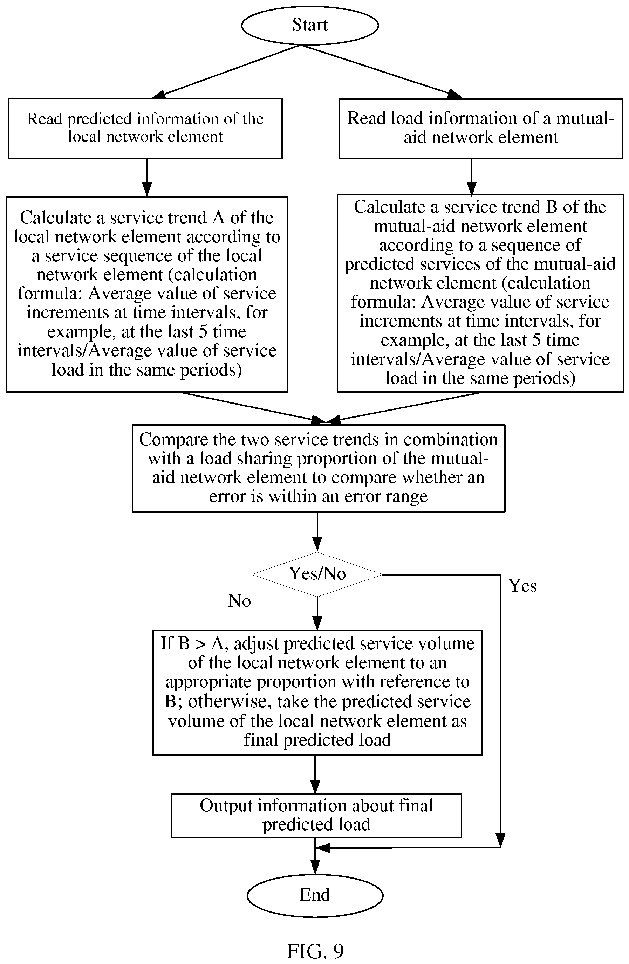

Specifically, refer to FIG. 9. FIG. 9 is a flowchart of correcting predicted load of a network element, including: reading predicted information of the local network element; reading predicted information of a mutual-aid network element, calculating a service load trend of the local network element and a service load trend of the mutual-aid network element; checking whether the two service load trends are within an error range; determining predicted load of the local network element in the next period according to a result of the check; and outputting information of final predicted load.

704. Send the load information of the local network element to the network element adjacent to the local network.

Specifically, a mutual-aid neighbor notification message is simultaneously sent to all mutual-aid network elements in the network element DPM address coding table;
an upper-layer neighbor notification message corresponding to the local network element is sent to an upper-layer network element in the network element DPM address coding table; and
a lower-layer neighbor notification message corresponding to the local network element is sent to a lower-layer network element in the network element DPM address coding table.

705. Adjust a working status. That is, before the next period arrives, switch a working status of a physical resource to a target status.

According to the embodiment, during prediction of network device load, predictive calculation is performed according to load information of a local device and load information of a device adjacent to the local device so as to predict load of the local device in a next period. This can improve accuracy in load prediction, allow a communications device to trace service load changes with better performance, and yield a more satisfactory effect in energy saving.

It should be noted that the embodiment takes only a network element as an example to describe a process for implementing the prediction methods. Similar to the preceding method, the method in the embodiment is also applicable to a subsystem of a network element, a board of a network element, or the like. No further details are provided herein.

### Embodiment 3

The embodiment takes a network element on a communications network as a load entity for detailed description. In addition, the load entity may also be a subsystem on the communications network or a board on the communications network.

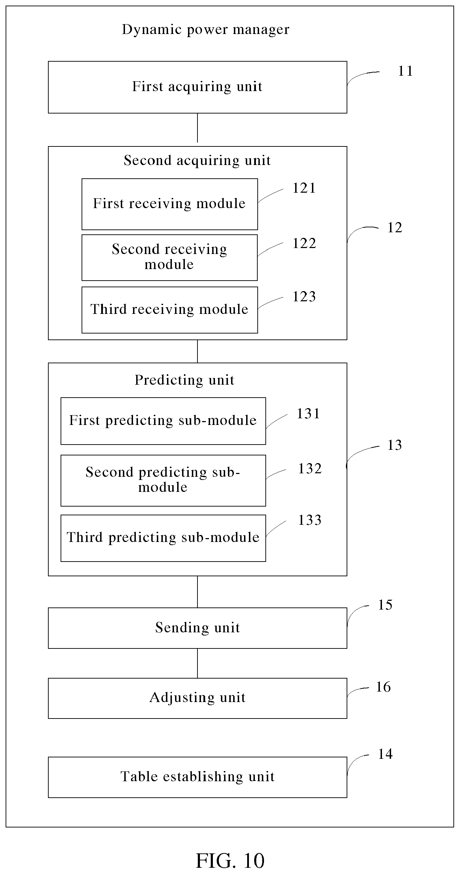

Based on the preceding embodiments, the embodiment provides a dynamic power manager, as shown in FIG. 10, including: a first acquiring unit 11, a second acquiring unit 12, and a predicting unit 13.

The first acquiring unit 11 is configured to acquire load information of a local network element.

The second acquiring unit 12 is configured to acquire load information of a network element adjacent to the local network element.

The predicting unit 13 is configured to predict load of the local network element in a next period according to the load information of the local network element and the load information of the network element adjacent to the local network element.

The second acquiring unit 12 specifically includes:
a first receiving module 121, configured to receive a mutual-aid neighbor notification message sent by a mutual-aid network element in a DPM address coding table and obtain current load information of the mutual-aid network element by processing the mutual-aid neighbor notification message;
a second receiving module 122, configured to receive an upper-layer neighbor notification message that is sent by an upper-layer network element in a network element DPM address coding table and corresponds to the local network element and obtain current load information of the upper-layer network element by processing the upper-layer neighbor notification message; and
a third receiving module 123, configured to receive a lower-layer neighbor notification message that is sent by a lower-layer network element in the network element DPM address coding table and corresponds to the local network element and obtain current load information of the lower-layer network element by processing the lower-layer neighbor notification message.

Current load information of the network element adjacent to the local network element is obtained by summarizing the current load information of the mutual-aid network element, the current load information of the upper-layer network element, and the current load information of the lower-layer network element.

The predicting unit 13 further includes:
a first predicting module 131, configured to predict load of the local network element in the next period according to X = X1 + X2 + ... + Xn, where X is the total ingress load of the local network element in the next period, X1 is predicted ingress load of an adjacent network element 1 in the next period, X2 is predicted ingress load of an adjacent network element 2 in the next period, and Xn is predicted ingress load of an adjacent network element n in the next period;
a second predicting module 132, configured to compare the value of ΔD1 with the value of ΔD2, where ΔD1 is an average error in predicting, according to X = X1 + X2 + ... + Xn, load of the local network element in the next period, ΔD2 is an average error in predicting, by the local network element, the load of the local network element in the next period, if ΔD1 > ΔD2, the load, which is predicted by the local network element, of the local network element in the next period is taken as the predicted load of the local network element in the next period, and if ΔD1 < ΔD2, the load, which is predicted according to X = X1 + X2 + ... + Xn, of the local network element in the next period is taken as the predicted load of the local network element in the next period; and
a third predicting module 133, configured to according to Y = A × B + C × D, where Y is predicted load of the local network element at a next moment, the value of A may be set or A = ΔD2/(ΔD2 + ΔD1), B is load of the local network element at the next moment and is predicted according to X = X1 + X2 + ... + Xn, the value of C may be set or C = ΔD1/(ΔD2 + ΔD1), D is load of the local network element in the next period and this load is predicted by the local network element, ΔD1 is the average error in predicting, according to X = X1 + X2 + ... + Xn, the load of the local network element in the next period, and ΔD2 is the average error in predicting, by the local network element, the load of the local network element in the next period.

Next, after the predicting unit predicts the load of the local network element in the next period, a correcting unit may correct, by using service volume of the mutual-aid network element of the local network element, the predicted load of the local network element in the next period.

Still next, the dynamic power manager according to the embodiment further includes a table establishing unit 14 configured to:
store an address of one or more mutual-aid network elements in a corresponding position in the network element DPM address coding table, where the mutual-aid network element is a network element, which is located at a same layer as the local network element and has a service association with the local network element;
store an address of one or more upper-layer network elements in a corresponding position in the network element DPM address coding table, where the upper-layer network element is a network element at an upper network layer, which is located at a different layer from the local network element and has a service association with the local network element; and
store an address of one or more lower-layer network elements in a corresponding position in the network element DPM address coding table, where the lower-layer network element is a network element at a lower network layer, which is located at a different layer from the local network element and has a service association with the local network element.

The table establishing unit 14 is further configured to update the network element DPM address coding table according to address information of the network element adjacent to the local network element, where the address information is sent by a network management system OM, and refresh the network element DPM address coding table in a scheduled manner.

After the predicting unit predicts the load of the local network element in the next period, a sending unit 15 performs the following operations:
simultaneously sending a mutual-aid neighbor notification message to all mutual-aid network elements in the network element DPM address coding table;
sending an upper-layer neighbor notification message corresponding to the local network element to an upper-layer network element in the network element DPM address coding table; and
sending a lower-layer neighbor notification message corresponding to the local network element to a lower-layer network element in the network element DPM address coding table.

An adjusting unit 16 is configured to adjust a working status of the local network element in the next period according to the predicted load of the local network element in the next period.

In addition, the embodiment further provides:
a first interface unit, configured to receive information sent by the OM, where the OM manages and maintains a network element through the first interface unit; and
a second interface unit, configured for mutual communication between the DPMs, where the local network element and the network element adjacent to the local network element exchange information by using the second interface unit.

The dynamic power manager according to the embodiment corresponds to the load prediction methods according to Embodiment 2. Reference may be made to detailed descriptions of the methods in Embodiment 2.

According to the embodiment, during prediction of network device load, predictive calculation is performed according to load information of a local device and load information of a device adjacent to the local device so as to predict load of the local device in a next period. This can improve accuracy in load prediction, allow a communications device to trace service load changes with better performance, and yield a more satisfactory effect in energy saving.

The embodiment further provides a dynamic power manager. The load entity according to the embodiment may also be a network element on the communications network, a subsystem of a network element, a board of a network element, or the like.

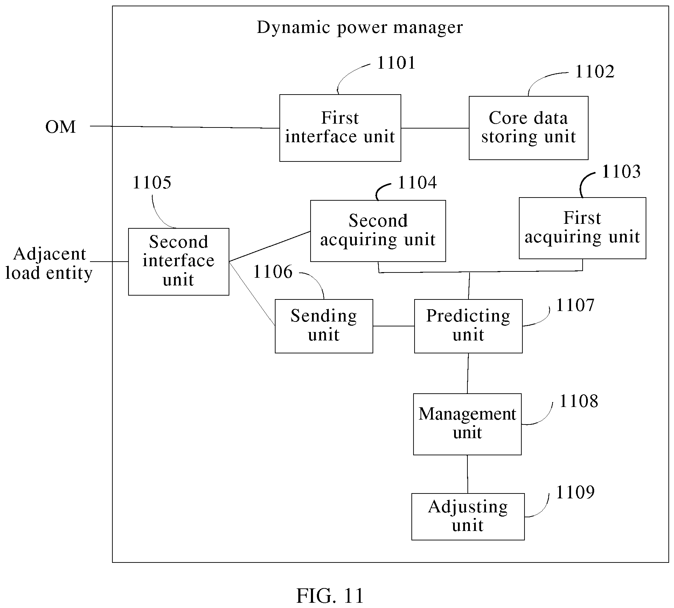

As shown in FIG. 11, the dynamic power manager includes: a first interface unit 1101, a core data storing unit 1102, a first acquiring unit 1103, a second acquiring unit 1104, a second interface unit 1105, a sending unit 1106, a predicting unit 1107, a management unit 1108, and an adjusting unit 1109.

The first interface unit 1101 is configured to receive information sent by the OM, where the OM manages and maintains a load entity through the first interface unit.

The core data storing unit 1102 is configured to store an energy-saving policy, neighbor route information, service load information, and error key data that are configured by the OM.

The first acquiring unit 1103 is configured to acquire load information of a local load entity.

The first acquiring unit is specifically configured to: collect current service load, and chronologically form a sequence of actual values of the service load;
predict service load at a next moment according to a local service prediction algorithm, and chronologically form a sequence of predicted values of the service load;
chronologically form an error value sequence for error values, where a prediction error at a certain moment T = the difference between a predicted value of service load at the T moment and an actual value of the service load at the T moment; and
obtain an average prediction error by selecting absolute values of error values at N (for example, N = 30) moments before a current moment, adding them together, and averaging them, where the average prediction error is taken as an index to measure accuracy of a local prediction method.

A network element receives service load from upper- and lower-layer neighbors in an Ingress direction and sends the processed service load to the upper- and lower-layer neighboring network elements in an Egress direction. Therefore, the processing in the preceding steps needs to be performed both in the Ingress and Egress path directions so as to form a series of prediction results. A prediction result in the Egress direction needs to be sent to a corresponding neighbor through a subsequent neighbor notification function so as to take part in a process for information processing and service load prediction performed by a DPM of a neighboring service network element; and a prediction result in the Ingress direction needs to take part in a local process for subsequent load prediction.

The second acquiring unit 1104 is configured to acquire load information of a load entity adjacent to the local load entity.

The second interface unit 1105 is configured for mutual communication between the DPMs, where the local load entity and the load entity adjacent to the local load entity exchange information by using the second interface unit.

The sending unit 1106 is configured to send a mutual-aid neighbor notification message to all mutual-aid load entities in a load entity DPM address coding table and send an upper-layer neighbor notification message corresponding to the local load entity to an upper-layer load entity in the load entity DPM address coding table.

The predicting unit 1107 is configured to predict load of the local load entity in a next period according to the load information of the local load entity and the load information of the load entity adjacent to the local load entity.

The management unit 1108 is configured to add a redundant performance requirement B reserved in the energy-saving policy into the predicted load A of the local load entity in the next period so as to update the predicted load of the local load entity in the next period.

The adjusting unit 1109 is configured to adjust a working status of the local load entity in the next period according to the predicted load of the local load entity in the next period, where the predicted load is updated by the management unit 1106.

During prediction of network element load, the apparatus according to the embodiment of the present disclosure performs predictive calculation according to current load information of a local network element and load information of a network element adjacent to the local network element so as to predict load of the local network element in a next period. Compared with the prior art where, during the prediction of network element load information in the prior art, load prediction is performed only according to information of a single network element, the apparatus according to the technical solutions of the present disclosure improves accuracy in prediction of network element load, allows a communications device to trace service load changes with better performance, and saves energy.

It should be noted that the apparatus and the methods according to the present disclosure may also be used in a communications system that includes multiple subsystems, for example, a typical communications system that includes subsystems, such as a main control subsystem, a switching subsystem, a call/service processing subsystem, an interface subsystem, and a storage subsystem. Each of the subsystems may similarly be classified into an upper/lower-layer service processing relationship in a service plane while they may exchange messages in a control plane.

Therefore, with reference to the preceding embodiments, a dynamic power management unit DPM may be deployed on each of the subsystems. The DPMs on the subsystems operate under management and configuration of the main control subsystem, exchange service load information in the control plane, and perform service load prediction and execute a dynamic energy-saving function according to the steps and procedures in the preceding embodiments.

The embodiments of the present disclosure are mainly used for load prediction of a network device to improve accuracy in the load prediction of the network device, thereby implementing energy saving of the network device.

The foregoing descriptions are merely specific implementation manners of the present disclosure, but not intended to limit the protection scope of the present disclosure. Any modification or replacement readily conceivable by a person skilled in the art within the technical scope disclosed in the present disclosure shall fall within the protection scope of the present disclosure. Therefore, the protection scope of the present disclosure is subject to the protection scope of the appended claims.

## Claims

1. A load prediction method, comprising:
acquiring load information of a local load entity;
acquiring load information of a load entity adjacent to the local load entity; and
predicting load of the local load entity in a next period according to the load information of the local load entity and the load information of the load entity adjacent to the local load entity; **characterised in that** the load entity adjacent to the local load entity comprises: a mutual-aid load entity, an upper-layer load entity, and a lower-layer load entity, and the acquiring load information of a load entity adjacent to the local load entity comprises:
receiving a mutual-aid neighbor notification message sent by a mutual-aid load entity in a load entity dynamic power manager DPM address coding table, and obtaining load information of the mutual-aid load entity by processing the mutual-aid neighbor notification message, wherein the load information comprises: actual current load, predicted load, a prediction error, and time information;
receiving an upper-layer neighbor notification message that is sent by an upper-layer load entity in the load entity DPM address coding table and corresponds to the local load entity, and obtaining load information of the upper-layer load entity by processing the upper-layer neighbor notification message;
receiving a lower-layer neighbor notification message that is sent by a lower-layer load entity in the load entity DPM address coding table and corresponds to the local load entity, and obtaining load information of the lower-layer load entity by processing the lower-layer neighbor notification message; and
obtaining the load information of the load entity adjacent to the local load entity by summarizing the load information of the mutual-aid load entity, the load information of the upper-layer load entity, and the load information of the lower-layer load entity.

2. The load prediction method according to claim 1, wherein the predicting load of the local load entity in a next period according to the load information of the local load entity and the load information of the load entity adjacent to the local load entity comprises:
predicting the load of the local load entity in the next period according to X = X1 + X2 + ... + Xn, wherein X is the total predicted ingress load of the local load entity in the next period, X1 is predicted ingress load of an adjacent load entity 1 in the next period, X2 is predicted ingress load of an adjacent load entity 2 in the next period, and Xn is predicted ingress load of an adjacent load entity n in the next period; or
comparing the value of ΔD1 with the value of ΔD2, wherein ΔD1 is an average error in predicting, according to X = X1 + X2 + ... + Xn, the load of the local load entity in the next period, ΔD2 is an average error in predicting, by the local load entity, the load of the local load entity in the next period, if ΔD1 > ΔD2, the load, which is predicted by the local load entity, of the local load entity in the next period is taken as the predicted load of the local load entity in the next period, and if ΔD1 < ΔD2, the load, which is predicted according to X = X1 + X2 + ... + Xn, of the local load entity in the next period is taken as the predicted load of the local load entity in the next period; or
according to Y = A × B + C × D, wherein Y is predicted load of the local load entity at a next moment, the value of A is set or A = ΔD2/(ΔD2 + ΔD1), B is load of the local load entity at the next moment and this load is predicted according to X = X1 + X2 + ... + Xn, the value of C is set or C = ΔD1/(ΔD2 + ΔD1), D is load of the local load entity in the next period and this load is predicted by the local load entity, ΔD1 is the average error in predicting, according to X = X1 + X2 + ... + Xn, the load of the local load entity in the next period, and ΔD2 is the average error in predicting, by the local load entity, the load of the local load entity in the next period.

3. The load prediction method according to claim 1, further comprising:
correcting the predicted load of the local load entity in the next period according to the load information of the mutual-aid load entity of the local load entity.

4. The load prediction method according to claim 1, further comprising establishing the load entity DPM address coding table which specifically is:
storing an address of one or more mutual-aid load entities in a corresponding position in the load entity DPM address coding table, wherein the mutual-aid load entity is a network element, which is located at a same layer as the local load entity and has a service association with the local load entity;
storing an address of one or more upper-layer load entities in a corresponding position in the load entity DPM address coding table, wherein the upper-layer load entity is a load entity at an upper network layer, which is located at a different layer from the local load entity and has a service association with the local load entity; and
storing an address of one or more lower-layer load entities in a corresponding position in the load entity DPM address coding table, wherein the lower-layer load entity is a unit at a lower network layer, which is located at a different layer from the local load entity and has a service association with the local load entity.

5. The load prediction method according to claim 1, further comprising:
updating the load entity DPM address coding table according to address information of the load entity adjacent to the local load entity, wherein the address information is sent by an operation and maintenance terminal OM; and
refreshing the load entity DPM address coding table in a scheduled manner.

6. The load prediction method according to claim 1, further comprising sending the load information of the local load entity to the load entity adjacent to the local load entity, which specifically is:
simultaneously sending a mutual-aid neighbor notification message to all mutual-aid load entities in the load entity DPM address coding table;
sending an upper-layer neighbor notification message corresponding to the local load entity to an upper-layer load entity in the load entity DPM address coding table; and
sending a lower-layer neighbor notification message corresponding to the local load entity to a lower-layer load entity in the load entity DPM address coding table.

7. The load prediction method according to any one of claims 1-6, wherein the load entity is a network element on a communications network, a subsystem of a network element, or a board of a network element.

8. The load prediction method according to claim 1, further comprising:
adjusting a working status of the local load entity according to the predicted load of the local load entity in the next period.

9. A dynamic power manager, DPM, comprising:
a first acquiring unit (11), configured to acquire load information of a local load entity;
a second acquiring unit (12), configured to acquire load information of a load entity adjacent to the local load entity; and
a predicting unit (13), configured to predict load of the local load entity in a next period according to the load information of the local load entity and the load information of the load entity adjacent to the local load entity;
**characterised in that** the load entity adjacent to the local load entity comprises: a mutual-aid load entity, an upper-layer load entity, and a lower-layer load entity, and the second acquiring unit is configured to: receive a mutual-aid neighbor notification message sent by a mutual-aid load entity in a load entity DPM address coding table, and obtain load information of the mutual-aid load entity by processing the mutual-aid neighbor notification message, wherein the load information comprises: actual current load, predicted load, a prediction error, and time information;
receive an upper-layer neighbor notification message that is sent by an upper-layer load entity in the load entity DPM address coding table and corresponds to the local load entity, and obtain load information of the upper-layer load entity by processing the upper-layer neighbor notification message;
receive a lower-layer neighbor notification message that is sent by a lower-layer load entity in the load entity DPM address coding table and corresponds to the local load entity, and obtain load information of the lower-layer load entity by processing the lower-layer neighbor notification message; and
obtain the load information of the load entity adjacent to the local load entity by summarizing the load information of the mutual-aid load entity, the load information of the upper-layer load entity, and the load information of the lower-layer load entity.

10. The dynamic power manager according to claim 9, wherein the predicting unit comprises any one of the following modules:
a first predicting module (131), configured to predict the load of the local load entity in the next period according to X = X1 + X2 + ... + Xn, wherein X is the total predicted ingress load of the local load entity in the next period, X1 is predicted ingress load of an adjacent load entity 1 in the next period, X2 is predicted ingress load of an adjacent load entity 2 in the next period, and Xn is predicted ingress load of an adjacent load entity n in the next period;
a second predicting module, configured to compare the value of ΔD1 with the value of ΔD2, wherein ΔD1 is an average error in predicting, according to X = X1 + X2 + ... + Xn, the load of the local load entity in the next period, ΔD2 is an average error in predicting, by the local load entity, the load of the local load entity in the next period, if ΔD1 > ΔD2, the load, which is predicted by the local load entity, of the local load entity in the next period is taken as the predicted load of the local load entity in the next period, and if ΔD1 < ΔD2, the load, which is predicted according to X = X1 + X2 + ... + Xn, of the local load entity in the next period is taken as the predicted load of the local load entity in the next period; and
a third predicting module, configured to according to Y = A × B + C × D, wherein Y is predicted load of the local load entity at a next moment, the value of A is set or A = ΔD2/(ΔD2 + ΔD1), B is load of the local load entity at the next moment and this load is predicted according to X = X1 + X2 + ... + Xn, the value of C is set or C = ΔD1/(ΔD2 + ΔD1), D is load of the local load entity in the next period and this load is predicted by the local load entity, ΔD1 is the average error in predicting, according to X = X1 + X2 + ... + Xn, the load of the local load entity in the next period, and ΔD2 is the average error in predicting, by the local load entity, the load of the local load entity in the next period.

11. The dynamic power manager according to claim 9, further comprising:
a correcting unit, configured to correct, by using the load information of the mutual-aid load entity of the local load entity, the predicted load of the local load entity in the next period.

12. The dynamic power manager according to claim 9, further comprising: a table establishing unit (14), which is configured to:
store an address of one or more mutual-aid load entities in a corresponding position in the load entity DPM address coding table, wherein the mutual-aid load entity is a network element, which is located at a same layer as the local load entity and has a service association with the local load entity;
store an address of one or more upper-layer load entities in a corresponding position in the load entity DPM address coding table, wherein the upper-layer load entity is a load entity at an upper network layer, which is located at a different layer from the local load entity and has a service association with the local load entity; and
store an address of one or more lower-layer load entities in a corresponding position in the load entity DPM address coding table, wherein the lower-layer load entity is a unit at a lower network layer, which is located at a different layer from the local load entity and has a service association with the local load entity.

13. The dynamic power manager according to claim 12, wherein the table establishing unit is further configured to:
update the load entity DPM address coding table according to address information of the load entity adjacent to the local load entity, wherein the address information is sent by an OM; and
refresh the load entity DPM address coding table in a scheduled manner.

14. The dynamic power manager according to claim 9 , further comprising a sending unit (15), which is configured to:
simultaneously send a mutual-aid neighbor notification message to all mutual-aid load entities in the load entity DPM address coding table;
send an upper-layer neighbor notification message corresponding to the local load entity to an upper-layer load entity in the load entity DPM address coding table; and
send a lower-layer neighbor notification message corresponding to the local load entity to a lower-layer load entity in the load entity DPM address coding table.

15. The dynamic power manager according to claim 9, further comprising: a first interface unit (1101), configured to receive information sent by the OM.

16. The dynamic power manager according to claim 9, further comprising: a second interface unit (1105), configured for mutual communication between DPMs.

17. The dynamic power manager according to any one of claims 9-16, wherein the load entity is a network element on a communications network, a subsystem of a network element, or a board of a network element.

18. The dynamic power manager according to claim 9, further comprising:
an adjusting unit (1109), configured to adjust a working status of the local load entity according to the predicted load of the local load entity in the next period.

19. An energy-saving control communications system, comprising: an operation and management terminal OM and a dynamic power manager DPM wherein the DPM is configured to acquire load information of a local load entity; acquire load information of a load entity adjacent to the local load entity; and predict load of the local load entity in a next period according to the load information of the local load entity and the load information of the load entity adjacent to the local load entity; wherein the load entity adjacent to the local load entity comprises: a mutual-aid load entity, an upper-layer load entity, and a lower-layer load entity, and the acquiring load information of a load entity adjacent to the local load entity comprises: receiving a mutual-aid neighbor notification message sent by a mutual-aid load entity in a load entity dynamic power manager DPM address coding table, and obtaining load information of the mutual-aid load entity by processing the mutual-aid neighbor notification message, wherein the load information comprises: actual current load, predicted load, a prediction error, and time information; receiving an upper-layer neighbor notification message that is sent by an upper-layer load entity in the load entity DPM address coding table and corresponds to the local load entity, and obtaining load information of the upper-layer load entity by processing the upper-layer neighbor notification message; receiving a lower-layer neighbor notification message that is sent by a lower-layer load entity in the load entity DPM address coding table and corresponds to the local load entity, and obtaining load information of the lower-layer load entity by processing the lower-layer neighbor notification message; and obtaining the load information of the load entity adjacent to the local load entity by summarizing the load information of the mutual-aid load entity, the load information of the upper-layer load entity, and the load information of the lower-layer load entity; and
the OM is configured to perform neighbor identification configuration for a DPM as well as establishment, releasing and refreshing, and maintenance for a neighbor route message.

20. The energy-saving control communications system according to claim 19, wherein the DPM is located in the load entity, and the load entity is a network element on a communications network, a subsystem of a network element, or a board of a network element.

## Patentansprüche

1. Lastvorhersageverfahren, umfassend:
Erfassen von Lastinformationen einer lokalen Lastentität;
Erfassen von Lastinformationen einer Lastentität neben der lokalen Lastentität und Vorhersagen einer Last der lokalen Lastentität in einem nächsten Zeitraum gemäß den Lastinformationen der lokalen Lastentität und den Lastinformationen der Lastentität neben der lokalen Lastentität;
**dadurch gekennzeichnet, dass**
die Lastentität neben der lokalen Lastentität eine Gegenseitigkeitsunterstützungs-Lastentität, eine Oberschicht-Lastentität und eine Unterschicht-Lastentität umfasst und das Erfassen von Lastinformationen einer Lastentität neben der lokalen Lastentität Folgendes umfasst:
Empfangen einer Gegenseitigkeitsunterstützungs-Nachbarbenachrichtigungsnachricht, die durch eine Gegenseitigkeitsunterstützungs-Lastentität in einer Lastentität-DPM(Dynamischer Leistungsmanager)-Adressencodierungstabelle gesendet wird, und Erhalten von Lastinformationen der Gegenseitigkeitsunterstützungs-Lastentität durch Verarbeiten der Gegenseitigkeitsunterstützungs-Nachbarbenachrichtigungsnachricht, wobei die Lastinformationen tatsächliche gegenwärtige Last, vorhergesagte Last, Vorhersagefehler und Zeitinformationen umfassen;
Empfangen einer Oberschicht-Nachbarbenachrichtigungsnachricht, die durch eine Oberschicht-Lastentität in der Lastentität-DPM-Adressencodierungstabelle gesendet wird und der lokalen Lastentität entspricht, und Erhalten von Lastinformationen der Oberschicht-Lastentität durch Verarbeiten der Oberschicht-Nachbarbenachrichtigungsnachricht;
Empfangen einer Unterschicht-Nachbarbenachrichtigungsnachricht, die durch eine Unterschicht-Lastentität in der Lastentität-DPM-Adressencodierungstabelle gesendet wird und der lokalen Lastentität entspricht, und Erhalten von Lastinformationen der Unterschicht-Lastentität durch Verarbeiten der Unterschicht-Nachbarbenachrichtigungsnachricht; und
Erhalten der Lastinformationen der Lastentität neben der lokalen Lastentität durch Zusammenfassen der Lastinformationen der Gegenseitigkeitsunterstützungs-Lastentität, der Lastinformationen der Oberschicht-Lastentität und der Lastinformationen der Unterschicht-Lastentität.

2. Lastvorhersageverfahren nach Anspruch 1, wobei das Vorhersagen von Last der lokalen Lastentität in einem nächsten Zeitraum gemäß den Lastinformationen der lokalen Lastentität und den Lastinformationen der Lastentität neben der lokalen Lastentität Folgendes umfasst:
Vorhersagen der Last der lokalen Lastentität im nächsten Zeitraum gemäß X = X1 + X2 + ... + Xn, wobei X die vorhergesagte Gesamteingangslast der lokalen Lastentität im nächsten Zeitraum ist, X1 die vorhergesagte Eingangslast einer angrenzenden Lastentität 1 im nächsten Zeitraum ist, X2 vorhergesagte Eingangslast einer angrenzenden Lastentität 2 im nächsten Zeitraum ist und Xn vorhergesagte Eingangslast einer angrenzenden Lastentität n im nächsten Zeitraum ist; oder
Vergleichen des Werts von ΔD1 mit dem Wert von ΔD2, wobei ΔD1 ein Durchschnittsfehler beim Vorhersagen, gemäß X = X1 + X2 + ... + Xn, der Last der lokalen Lastentität im nächsten Zeitraum ist, ΔD2 ein Durchschnittsfehler beim Vorhersagen, durch die lokale Lastentität, der Last der lokalen Lastentität im nächsten Zeitraum ist, im Fall ΔD1 > ΔD2 die Last, die durch die lokale Lastentität vorhergesagt wird, der lokalen Lastentität im nächsten Zeitraum als die vorhergesagte Last der lokalen Lastentität im nächsten Zeitraum genommen wird und im Fall ΔD1 < ΔD2 die Last, die gemäß X = X1 + X2 + ... + Xn vorhergesagt wird, der lokalen Lastentität im nächsten Zeitraum als die vorhergesagte Last der lokalen Lastentität im nächsten Zeitraum genommen wird; oder
gemäß Y = A × B + C × D, wobei Y vorhergesagte Last der lokalen Lastentität zu einem nächsten Zeitpunkt ist, der Wert von A festgelegt oder A = ΔD2/(ΔD2 + ΔD1) ist, B die Last der lokalen Lastentität zum nächsten Zeitpunkt ist und diese Last gemäß X = X1 + X2 + ... + Xn vorhergesagt wird, der Wert von C festgelegt oder C = ΔD1/(ΔD2 + AD1) ist, D die Last der lokalen Lastentität im nächsten Zeitraum ist und diese Last durch die lokale Lastentität vorhergesagt wird, ΔD1 der Durchschnittsfehler beim Vorhersagen, gemäß X = X1 + X2 + ... + Xn, der Last der lokalen Lastentität im nächsten Zeitraum ist und ΔD2 der Durchschnittsfehler beim Vorhersagen, durch die lokale Lastentität, der Last der lokalen Lastentität im nächsten Zeitraum ist.

3. Lastvorhersageverfahren nach Anspruch 1, ferner umfassend:
Korrigieren der vorhergesagten Last der lokalen Lastentität im nächsten Zeitraum gemäß den Lastinformationen der Gegenseitigkeitsunterstützungs-Lastentität der lokalen Lastentität.

4. Lastvorhersageverfahren nach Anspruch 1, das ferner Erstellen der Lastentität-DPM-Adressencodierungstabelle umfasst, was spezifisch Folgendes beinhaltet:
Speichern einer Adresse einer oder mehrerer Gegenseitigkeitsunterstützungs-Lastentitäten an einer entsprechenden Stelle in der Lastentität-DPM-Adressencodierungstabelle, wobei die Gegenseitigkeitsunterstützungs-Lastentität ein Netzelement ist, das sich in derselben Schicht wie die lokale Lastentität befindet und eine Dienstassoziation mit der lokalen Lastentität aufweist;
Speichern einer Adresse einer oder mehrerer Oberschicht-Lastentitäten an einer entsprechenden Stelle in der Lastentität-DPM-Adressencodierungstabelle, wobei die Oberschicht-Lastentität eine Lastentität in einer oberen Netzschicht ist, die sich in einer unterschiedlichen Schicht wie die lokale Lastentität befindet und eine Dienstassoziation mit der lokalen Lastentität aufweist; und
Speichern einer Adresse einer oder mehrerer Unterschicht-Lastentitäten an einer entsprechenden Stelle in der Lastentität-DPM-Adressencodierungstabelle, wobei die Unterschicht-Lastentität eine Einheit in einer unteren Netzschicht ist, die sich in einer anderen Schicht als die lokale Lastentität befindet und eine Dienstassoziation mit der lokalen Lastentität aufweist.

5. Lastvorhersageverfahren nach Anspruch 1, ferner umfassend:
Aktualisieren der Lastentität-DPM-Adressencodierungstabelle gemäß den Adresseninformationen der Lastentität neben der lokalen Lastentität, wobei die Adresseninformationen durch ein Betrieb-und-Wartungs-Endgerät OM gesendet werden; und
Auffrischen der Lastentität-DPM-Adressencodierungstabelle auf geplante Art und Weise.

6. Lastvorhersageverfahren nach Anspruch 1, das ferner Senden der Lastinformationen der lokalen Lastentität an die Lastentität neben der lokalen Lastentität umfasst, was spezifisch Folgendes beinhaltet:
gleichzeitiges Senden einer Gegenseitigkeitsunterstützungs-Nachbarbenachrichtigungsnachricht an alle Gegenseitigkeitsunterstützungs-Lastentitäten in der Lastentität-DPM-Adressencodierungstabelle;
Senden einer Oberschicht-Nachbarbenachrichtigungsnachricht, die der lokalen Lastentität entspricht, an eine Oberschicht-Lastentität in der Lastentität-DPM-Adressencodierungstabelle und
Senden einer Unterschicht-Nachbarbenachrichtigungsnachricht, die der lokalen Lastentität entspricht, an eine Unterschicht-Lastentität in der Lastentität-DPM-Adressencodierungstabelle.

7. Lastvorhersageverfahren nach einem der Ansprüche 1-6, wobei die Lastentität ein Netzelement in einem Kommunikationsnetz, ein Subsystem eines Netzelements oder eine Platine eines Netzelements ist.

8. Lastvorhersageverfahren nach Anspruch 1, ferner umfassend:
Einstellen eines Arbeitszustands der lokalen Lastentität gemäß der vorhergesagten Last der lokalen Lastentität im nächsten Zeitraum.

9. Dynamischer Leistungsmanager DPM, umfassend:
eine erste Erfassungseinheit (11), die dazu konfiguriert ist, Lastinformationen einer lokalen Lastentität zu erfassen;
eine zweite Erfassungseinheit (12), die dazu konfiguriert ist, Lastinformationen einer Lastentität neben der lokalen Lastentität zu erfassen; und
eine Vorhersageeinheit (13), die dazu konfiguriert ist, eine Last der lokalen Lastentität in einem nächsten Zeitraum gemäß den Lastinformationen der lokalen Lastentität und den Lastinformationen der Lastentität neben der lokalen Lastentität vorherzusagen;
**dadurch gekennzeichnet, dass**
die Lastentität neben der lokalen Lastentität eine Gegenseitigkeitsunterstützungs-Lastentität, eine Oberschicht-Lastentität und eine Unterschicht-Lastentität umfasst und die zweite Erfassungseinheit konfiguriert ist zum:
Empfangen einer Gegenseitigkeitsunterstützungs-Nachbarbenachrichtigungsnachricht, die durch eine Gegenseitigkeitsunterstützungs-Lastentität in einer Lastentität-DPM-Adressencodierungstabelle gesendet wird, und Erhalten von Lastinformationen der Gegenseitigkeitsunterstützungs-Lastentität durch ein Verarbeiten der Gegenseitigkeitsunterstützungs-Nachbarbenachrichtigungsnachricht, wobei die Lastinformationen tatsächliche gegenwärtige Last, vorhergesagte Last, einen Vorhersagefehler und Zeitinformationen umfassen;
Empfangen einer Oberschicht-Nachbarbenachrichtigungsnachricht, die durch eine Oberschicht-Lastentität in der Lastentität-DPM-Adressencodierungstabelle gesendet wird und der lokalen Lastentität entspricht, und Erhalten von Lastinformationen der Oberschicht-Lastentität durch Verarbeiten der Oberschicht-Nachbarbenachrichtigungsnachricht;
Empfangen einer Unterschicht-Nachbarbenachrichtigungsnachricht, die durch eine Unterschicht-Lastentität in der Lastentität-DPM-Adressencodierungstabelle gesendet wird und der lokalen Lastentität entspricht, und Erhalten von Lastinformationen der Unterschicht-Lastentität durch Verarbeiten der Unterschicht-Nachbarbenachrichtigungsnachricht; und
Erhalten der Lastinformationen der Lastentität neben der lokalen Lastentität durch Zusammenfassen der Lastinformationen der Gegenseitigkeitsunterstützungs-Lastentität, der Lastinformationen der Oberschicht-Lastentität und der Lastinformationen der Unterschicht-Lastentität.

10. Dynamischer Leistungsmanager nach Anspruch 9, wobei die Vorhersageeinheit ein Beliebiges der folgenden Module umfasst:
ein erstes Vorhersagemodul (131), das dazu konfiguriert ist, die Last der lokalen Lastentität im nächsten Zeitraum gemäß X = X1 + X2 + ... + Xn vorherzusagen, wobei X die vorhergesagte Gesamteingangslast der lokalen Lastentität im nächsten Zeitraum ist, X1 die vorhergesagte Eingangslast einer angrenzenden Lastentität 1 im nächsten Zeitraum ist, X2 die vorhergesagte Eingangslast einer angrenzenden Lastentität 2 im nächsten Zeitraum ist und Xn die vorhergesagte Eingangslast einer angrenzenden Lastentität n im nächsten Zeitraum ist;
ein zweites Vorhersagemodul, das dazu konfiguriert ist, den Wert von ΔD1 mit dem Wert von ΔD2 zu vergleichen, wobei ΔD1 ein Durchschnittsfehler beim Vorhersagen, gemäß X = X1 + X2 + ... + Xn, der Last der lokalen Lastentität im nächsten Zeitraum ist, ΔD2 ein Durchschnittsfehler beim Vorhersagen, durch die lokale Lastentität, der Last der lokalen Lastentität im nächsten Zeitraum ist, im Fall ΔD1 > ΔD2 die Last, die durch die lokale Lastentität vorhergesagt wird, der lokalen Lastentität im nächsten Zeitraum als die vorhergesagte Last der lokalen Lastentität im nächsten Zeitraum genommen wird und, im Fall ΔD1 < ΔD2 die Last, die gemäß X = X1 + X2 + ... + Xn vorhergesagt wird, der lokalen Lastentität im nächsten Zeitraum als die vorhergesagte Last der lokalen Lastentität im nächsten Zeitraum genommen wird; und
ein drittes Vorhersagemodul, das gemäß Y = A × B + C × D konfiguriert ist, wobei Y die vorhergesagte Last der lokalen Lastentität zu einem nächsten Zeitpunkt ist, der Wert von A festgelegt oder A = ΔD2/(ΔD2 + ΔD1) ist, B die Last der lokalen Lastentität zum nächsten Zeitpunkt ist und diese Last gemäß X = X1 + X2 + ... + Xn vorhergesagt wird, der Wert von C festgelegt oder C = ΔD1/(ΔD2 + ΔD1) ist, D die Last der lokalen Lastentität im nächsten Zeitraum ist und diese Last durch die lokale Lastentität vorhergesagt wird, ΔD1 der Durchschnittsfehler beim Vorhersagen, gemäß X = X + X2 + ... + Xn, der Last der lokalen Lastentität im nächsten Zeitraum ist und ΔD2 der Durchschnittsfehler beim Vorhersagen, durch die lokale Lastentität, der Last der lokalen Lastentität im nächsten Zeitraum ist.

11. Dynamischer Leistungsmanager nach Anspruch 9, ferner umfassend:
eine Korrektureinheit, die dazu konfiguriert ist, die vorhergesagte Last der lokalen Lastentität im nächsten Zeitraum durch Verwenden der Lastinformationen der Gegenseitigkeitsunterstützungs-Lastentität der lokalen Lastentität zu korrigieren.

12. Dynamischer Leistungsmanager nach Anspruch 9, der ferner eine Tabellenerstellungseinheit (14) umfasst, die zu Folgendem konfiguriert ist:
Speichern einer Adresse einer oder mehrerer Gegenseitigkeitsunterstützungs-Lastentitäten an einer entsprechenden Stelle in der Lastentität-DPM-Adressencodierungstabelle, wobei die Gegenseitigkeitsunterstützungs-Lastentität ein Netzelement ist, das sich in derselben Schicht wie die lokale Lastentität befindet und eine Dienstassoziation mit der lokalen Lastentität aufweist;
Speichern einer Adresse einer oder mehrerer Oberschicht-Lastentitäten an einer entsprechenden Stelle in der Lastentität-DPM-Adressencodierungstabelle, wobei die Oberschicht-Lastentität eine Lastentität in einer oberen Netzschicht ist, die sich in einer anderen Schicht als die lokale Lastentität befindet und eine Dienstassoziation mit der lokalen Lastentität aufweist; und
Speichern einer Adresse einer oder mehrerer Unterschicht-Lastentitäten an einer entsprechenden Stelle in der Lastentität-DPM-Adressencodierungstabelle, wobei die Unterschicht-Lastentität eine Einheit in einer unteren Netzschicht ist, die sich in einer anderen Schicht als die lokale Lastentität befindet und eine Dienstassoziation mit der lokalen Lastentität aufweist.

13. Dynamischer Leistungsmanager nach Anspruch 12, wobei die Tabellenerstellungseinheit ferner zu Folgendem konfiguriert ist:
Aktualisieren der Lastentität-DPM-Adressencodierungstabelle gemäß den Adresseninformationen der Lastentität neben der lokalen Lastentität, wobei die Adresseninformationen durch ein OM gesendet werden; und
Auffrischen der Lastentität-DPM-Adressencodierungstabelle auf geplante Art und Weise.

14. Dynamischer Leistungsmanager nach Anspruch 9, der ferner eine Sendeeinheit (15) umfasst, die zu Folgendem konfiguriert ist:
gleichzeitiges Senden einer Gegenseitigkeitsunterstützungs-Nachbarbenachrichtigungsnachricht an alle Gegenseitigkeitsunterstützungs-Lastentitäten in der Lastentität-DPM-Adressencodierungstabelle;
Senden einer Oberschicht-Nachbarbenachrichtigungsnachricht, die der lokalen Lastentität entspricht, an eine Oberschicht-Lastentität in der Lastentität-DPM-Adressencodierungstabelle und
Senden einer Unterschicht-Nachbarbenachrichtigungsnachricht, die der lokalen Lastentität entspricht, an eine Unterschicht-Lastentität in der Lastentität-DPM-Adressencodierungstabelle.

15. Dynamischer Leistungsmanager nach Anspruch 9, der ferner eine erste Schnittstelleneinheit (1101) umfasst, die dazu konfiguriert ist, Informationen, die durch das OM gesendet werden, zu empfangen.

16. Dynamischer Leistungsmanager nach Anspruch 9, der ferner eine zweite Schnittstelleneinheit (1105) umfasst, die zur gegenseitigen Kommunikation zwischen DPM konfiguriert ist.

17. Dynamischer Leistungsmanager nach einem der Ansprüche 9-16, wobei die Lastentität ein Netzelement in einem Kommunikationsnetz, ein Subsystem eines Netzelements oder eine Platine eines Netzelements ist.

18. Dynamischer Leistungsmanager nach Anspruch 9, der ferner eine Einstellungseinheit (1109) umfasst, die dazu konfiguriert ist, einen Arbeitszustand der lokalen Lastentität gemäß der vorhergesagten Last der lokalen Lastentität im nächsten Zeitraum einzustellen.

19. Energiesparendes Steuerkommunikationssystem, das ein Betrieb-und-Wartungs-Endgerät OM und einen dynamischen Leistungsmanager DPM umfasst, wobei der DPM dazu konfiguriert ist, Lastinformationen einer lokalen Lastentität zu erfassen; Lastinformationen einer Lastentität neben der lokalen Lastentität zu erfassen und die Last der lokalen Lastentität in einem nächsten Zeitraum gemäß den Lastinformationen der lokalen Lastentität und den Lastinformationen der Lastentität neben der lokalen Lastentität vorherzusagen; wobei die Lastentität neben der lokalen Lastentität eine Gegenseitigkeitsunterstützungs-Lastentität, eine Oberschicht-Lastentität und eine Unterschicht-Lastentität umfasst und das Erfassen der Lastinformationen einer Lastentität neben der lokalen Lastentität Folgendes umfasst:
Empfangen einer Gegenseitigkeitsunterstützungs-Nachbarbenachrichtigungsnachricht, die durch eine Gegenseitigkeitsunterstützungs-Lastentität in einer Lastentität-DPM(Dynamischer Leistungsmanager)-Adressencodierungstabelle gesendet wird, und Erhalten von Lastinformationen der Gegenseitigkeitsunterstützungs-Lastentität durch ein Verarbeiten der Gegenseitigkeitsunterstützungs-Nachbarbenachrichtigungsnachricht, wobei die Lastinformationen tatsächliche gegenwärtige Last, vorhergesagte Last, einen Vorhersagefehler und Zeitinformationen umfassen; Empfangen einer Oberschicht-Nachbarbenachrichtigungsnachricht, die durch eine Oberschicht-Lastentität in der Lastentität-DPM-Adressencodierungstabelle gesendet wird und der lokalen Lastentität entspricht, und Erhalten von Lastinformationen der Oberschicht-Lastentität durch ein Verarbeiten der Oberschicht-Nachbarbenachrichtigungsnachricht; Empfangen einer Unterschicht-Nachbarbenachrichtigungsnachricht, die durch eine Unterschicht-Lastentität in der Lastentität-DPM-Adressencodierungstabelle gesendet wird und der lokalen Lastentität entspricht, und Erhalten von Lastinformationen der Unterschicht-Lastentität durch Verarbeiten der Unterschicht-Nachbarbenachrichtigungsnachricht;
und Erhalten der Lastinformationen der Lastentität neben der lokalen Lastentität durch Zusammenfassen der Lastinformationen der Gegenseitigkeitsunterstützungs-Lastentität, der Lastinformationen der Oberschicht-Lastentität und der Lastinformationen der Unterschicht-Lastentität; und
das OM dazu konfiguriert ist, eine Nachbaridentifizierungskonfiguration für einen DPM sowie Erstellung, Freigabe und Auffrischen und Verwaltung für eine Nachbarstreckennachricht durchzuführen.

20. Energiesparendes Steuerkommunikationssystem nach Anspruch 19, wobei sich der DPM in der Lastentität befindet und die Lastentität ein Netzelement in einem Kommunikationsnetz, ein Subsystem eines Netzelements oder eine Platine eines Netzelements ist.

## Revendications

1. Procédé de prédiction de charge, comprenant :
l'acquisition d'informations de charge d'une entité de charge locale ;
l'acquisition d'informations de charge d'une entité de charge adjacente à l'entité de charge locale ; et
la prédiction de charge de l'entité de charge locale dans une période suivante en fonction des informations de charge de l'entité de charge locale et des informations de charge de l'entité de charge adjacente à l'entité de charge locale ;
**caractérisé en ce que**
l'entité de charge adjacente à l'entité de charge locale comprend : une entité de charge d'aide mutuelle, une entité de charge de couche supérieure, et une entité de charge de couche inférieure, et l'acquisition d'informations de charge d'une entité de charge adjacente à l'entité de charge locale comprend :
la réception d'un message de notification de voisin d'aide mutuelle envoyé par une entité de charge d'aide mutuelle d'une table de codage d'adresse de gestionnaire de puissance dynamique DPM d'entité de charge, et l'obtention d'informations de charge de l'entité de charge d'aide mutuelle par traitement du message de notification de voisin d'aide mutuelle, les informations de charge comprenant : une charge courante réelle, une charge prédite, une erreur de prédiction et des informations temporelles ;
la réception d'un message de notification de voisin de couche supérieure qui est envoyé par une entité de charge de couche supérieure de la table de codage d'adresse DPM d'entité de charge et qui correspond à l'entité de charge locale, et l'obtention d'informations de charge de l'entité de charge de couche supérieure par traitement du message de notification de voisin de couche supérieure ;
la réception d'un message de notification de voisin de couche inférieure qui est envoyé par une entité de charge de couche inférieure de la table de codage d'adresse DPM d'entité de charge et qui correspond à l'entité de charge locale, et l'obtention d'informations de charge de l'entité de charge de couche inférieure par traitement du message de notification de voisin de couche inférieure ; et
l'obtention des informations de charge de l'entité de charge adjacente à l'entité de charge locale par agrégation des informations de charge de l'entité de charge d'aide mutuelle, des informations de charge de l'entité de charge de couche supérieure et des informations de charge de l'entité de charge de couche inférieure.

2. Procédé de prédiction de charge selon la revendication 1, dans lequel la charge de prédiction de l'entité de charge locale dans une période suivante en fonction des informations de charge de l'entité de charge locale et des informations de charge de l'entité de charge adjacente à l'entité de charge locale comprend :
la prédiction de la charge de l'entité de charge locale dans la période suivante selon X = X1 + X2 + ... + Xn, où X est la charge entrante prédite totale de l'entité de charge locale dans la période suivante, X1 est la charge entrante prédite d'une entité de charge adjacente 1 dans la période suivante, X2 est la charge entrante prédite d'une entité de charge adjacente 2 dans la période suivante, et Xn est la charge entrante prédite d'une entité de charge adjacente n dans la période suivante ; ou
la comparaison de la valeur de ΔD1 à la valeur de ΔD2, où ΔD1 est une erreur moyenne dans la prédiction, selon X = X1 + X2 + ... + Xn, de la charge de l'entité de charge locale dans la période suivante, ΔD2 est une erreur moyenne dans la prédiction, par l'entité de charge locale, de la charge de l'entité de charge locale dans la période suivante, si ΔD1 > ΔD2, la charge, qui est prédite par l'entité de charge locale, de l'entité de charge locale dans la période suivante est prise en tant que charge prédite de l'entité de charge locale dans la période suivante, et si ΔD1 < ΔD2, la charge, qui est prédite selon X = X1 + X2 + ... + Xn, de l'entité de charge locale dans la période suivante est prise en tant que charge prédite de l'entité de charge locale dans la période suivante ; ou
selon Y = A × B + C × D, où Y est la charge prédite de l'entité de charge locale à un moment suivant, la valeur de A est définie ou A = ΔD2 / (ΔD2 + ΔD1), B est la charge de l'entité de charge locale au moment suivant et cette charge est prédite selon X = X + X2 + ... + Xn, la valeur de C est définie ou C = ΔD1 / (ΔD2 + ΔD1), D est la charge de l'entité de charge locale dans la période suivante et cette charge est prédite par l'entité de charge locale, ΔD1 est l'erreur moyenne dans la prédiction, selon X = X + X2 + ... + Xn, de la charge de l'entité de charge locale dans la période suivante, et ΔD2 est l'erreur moyenne dans la prédiction, par l'entité de charge locale, de la charge de l'entité de charge locale dans la période suivante.

3. Procédé de prédiction de charge selon la revendication 1, comprenant en outre :
la correction de la charge prédite de l'entité de charge locale dans la période suivante en fonction des informations de charge de l'entité de charge d'aide mutuelle de l'entité de charge locale.

4. Procédé de prédiction de charge selon la revendication 1, comprenant en outre l'établissement de la table de codage d'adresse DPM d'entité de charge, qui consiste spécifiquement à :
stocker une adresse d'une ou plusieurs entités de charge d'aide mutuelle à une position correspondante dans la table de codage d'adresse DPM d'entité de charge, l'entité de charge d'aide mutuelle étant un élément de réseau, qui est situé au niveau d'une même couche que l'entité de charge locale et qui a une association de service avec l'entité de charge locale ;
stocker une adresse d'une ou plusieurs entités de charge de couche supérieure à une position correspondante dans la table de codage d'adresse DPM d'entité de charge, l'entité de charge de couche supérieure étant une entité de charge au niveau d'une couche de réseau supérieure, qui est située au niveau d'une couche différente de celle de l'entité de charge locale et qui a une association de service avec l'entité de charge locale ; et
stocker une adresse d'une ou plusieurs entités de charge de couche inférieure à une position correspondante dans la table de codage d'adresse DPM d'entité de charge, l'entité de charge de couche inférieure étant une unité au niveau d'une couche de réseau inférieure, qui est située au niveau d'une couche différente de celle de l'entité de charge locale et qui a une association de service avec l'entité de charge locale.

5. Procédé de prédiction de charge selon la revendication 1, comprenant en outre :
la mise à jour de la table de codage d'adresse DPM d'entité de charge selon des informations d'adresse de l'entité de charge adjacente à l'entité de charge locale, les informations d'adresse étant envoyées par un terminal d'exploitation et de maintenance OM ; et
le rafraîchissement de la table de codage d'adresse DPM d'entité de charge d'une manière programmée.

6. Procédé de prédiction de charge selon la revendication 1, comprenant en outre l'envoi des informations de charge de l'entité de charge locale à l'entité de charge adjacente à l'entité de charge locale, qui consiste spécifiquement à :
envoyer simultanément un message de notification de voisin d'aide mutuelle à toutes les entités de charge d'aide mutuelle de la table de codage d'adresse DPM d'entité de charge ;
envoyer un message de notification de voisin de couche supérieure correspondant à l'entité de charge locale à une entité de charge de couche supérieure de la table de codage d'adresse DPM d'entité de charge ; et
envoyer un message de notification de voisin de couche inférieure correspondant à l'entité de charge locale à une entité de charge de couche inférieure de la table de codage d'adresse DPM d'entité de charge.

7. Procédé de prédiction de charge selon l'une quelconque des revendications 1 à 6, dans lequel l'entité de charge est un élément de réseau sur un réseau de communication, un sous-système d'un élément de réseau, ou une carte d'un élément de réseau.

8. Procédé de prédiction de charge selon la revendication 1, comprenant en outre :
l'ajustement d'un état de fonctionnement de l'entité de charge locale en fonction de la charge prédite de l'entité de charge locale dans la période suivante.

9. Gestionnaire de puissance dynamique, DPM, comprenant :
une première unité d'acquisition (11), configurée pour acquérir des informations de charge d'une entité de charge locale ;
une deuxième unité d'acquisition (12), configurée pour acquérir des informations de charge d'une entité de charge adjacente à l'entité de charge locale ; et
une unité de prédiction (13), configurée pour prédire une charge de l'entité de charge locale dans une période suivante en fonction des informations de charge de l'entité de charge locale et des informations de charge de l'entité de charge adjacente à l'entité de charge locale ;
**caractérisé en ce que**
l'entité de charge adjacente à l'entité de charge locale comprend : une entité de charge d'aide mutuelle, une entité de charge de couche supérieure, et une entité de charge de couche inférieure, et la deuxième unité d'acquisition est configurée pour :
recevoir un message de notification de voisin d'aide mutuelle envoyé par une entité de charge d'aide mutuelle d'une table de codage d'adresse DPM d'entité de charge, et obtenir des informations de charge de l'entité de charge d'aide mutuelle par traitement du message de notification de voisin d'aide mutuelle, les informations de charge comprenant : une charge courante réelle, une charge prédite, une erreur de prédiction et des informations temporelles ;
recevoir un message de notification de voisin de couche supérieure qui est envoyé par une entité de charge de couche supérieure de la table de codage d'adresse DPM d'entité de charge et qui correspond à l'entité de charge locale, et obtenir des informations de charge de l'entité de charge de couche supérieure par traitement du message de notification de voisin de couche supérieure ;
recevoir un message de notification de voisin de couche inférieure qui est envoyé par une entité de charge de couche inférieure de la table de codage d'adresse DPM d'entité de charge et qui correspond à l'entité de charge locale, et obtenir des informations de charge de l'entité de charge de couche inférieure par traitement du message de notification de voisin de couche inférieure ; et
obtenir les informations de charge de l'entité de charge adjacente à l'entité de charge locale par agrégation des informations de charge de l'entité de charge d'aide mutuelle, des informations de charge de l'entité de charge de couche supérieure et des informations de charge de l'entité de charge de couche inférieure.

10. Gestionnaire de puissance dynamique selon la revendication 9, dans lequel l'unité de prédiction comprend l'un quelconque des modules suivants :
un premier module de prédiction (131), configuré pour prédire la charge de l'entité de charge locale dans la période suivante selon X = X1 + X2 + ... + Xn, où X est la charge entrante prédite totale de l'entité de charge locale dans la période suivante, X1 est la charge entrante prédite d'une entité de charge adjacente 1 dans la période suivante, X2 est la charge entrante prédite d'une entité de charge adjacente 2 dans la période suivante, et Xn est la charge entrante prédite d'une entité de charge adjacente n dans la période suivante ;
un deuxième module de prédiction, configuré pour comparer la valeur de ΔD1 à la valeur de ΔD2, où ΔD1 est une erreur moyenne dans la prédiction, selon X = X1 + X2 + ... + Xn, de la charge de l'entité de charge locale dans la période suivante, ΔD2 est une erreur moyenne dans la prédiction, par l'entité de charge locale, de la charge de l'entité de charge locale dans la période suivante, si ΔD1 > ΔD2, la charge, qui est prédite par l'entité de charge locale, de l'entité de charge locale dans la période suivante est prise en tant que charge prédite de l'entité de charge locale dans la période suivante, et si ΔD1 < ΔD2, la charge, qui est prédite selon X = X1 + X2 + ... + Xn, de l'entité de charge locale dans la période suivante est prise en tant que charge prédite de l'entité de charge locale dans la période suivante ; et
un troisième module de prédiction, configuré pour, selon Y = A × B + C × D, où Y est la charge prédite de l'entité de charge locale à un moment suivant, la valeur de A est définie ou A = ΔD2 / (ΔD2 + ΔD1), B est la charge de l'entité de charge locale au moment suivant et cette charge est prédite selon X = X1 + X2 + ... + Xn, la valeur de C est définie ou C = ΔD1 / (ΔD2 + AD1), D est la charge de l'entité de charge locale dans la période suivante et cette charge est prédite par l'entité de charge locale, ΔD1 est l'erreur moyenne dans la prédiction, selon X = X1 + X2 + ... + Xn, de la charge de l'entité de charge locale dans la période suivante, et ΔD2 est l'erreur moyenne dans la prédiction, par l'entité de charge locale, de la charge de l'entité de charge locale dans la période suivante.

11. Gestionnaire de puissance dynamique selon la revendication 9, comprenant en outre :
une unité de correction, configurée pour corriger, à l'aide des informations de charge de l'entité de charge d'aide mutuelle de l'entité de charge locale, la charge prédite de l'entité de charge locale dans la période suivante.

12. Gestionnaire de puissance dynamique selon la revendication 9, comprenant en outre :
une unité d'établissement de table (14), qui est configurée pour :
stocker une adresse d'une ou plusieurs entités de charge d'aide mutuelle à une position correspondante dans la table de codage d'adresse DPM d'entité de charge, l'entité de charge d'aide mutuelle étant un élément de réseau, qui est situé au niveau d'une même couche que l'entité de charge locale et qui a une association de service avec l'entité de charge locale ;
stocker une adresse d'une ou plusieurs entités de charge de couche supérieure à une position correspondante dans la table de codage d'adresse DPM d'entité de charge, l'entité de charge de couche supérieure étant une entité de charge au niveau d'une couche de réseau supérieure, qui est située au niveau d'une couche différente de celle de l'entité de charge locale et qui a une association de service avec l'entité de charge locale ; et
stocker une adresse d'une ou plusieurs entités de charge de couche inférieure à une position correspondante dans la table de codage d'adresse DPM d'entité de charge, l'entité de charge de couche inférieure étant une unité au niveau d'une couche de réseau inférieure, qui est située au niveau d'une couche différente de celle de l'entité de charge locale et qui a une association de service avec l'entité de charge locale.

13. Gestionnaire de puissance dynamique selon la revendication 12, dans lequel l'unité d'établissement de table est en outre configurée pour :
mettre à jour la table de codage d'adresse DPM d'entité de charge selon des informations d'adresse de l'entité de charge adjacente à l'entité de charge locale, les informations d'adresse étant envoyées par un OM ; et
rafraîchir la table de codage d'adresse DPM d'entité de charge d'une manière programmée.

14. Gestionnaire de puissance dynamique selon la revendication 9, comprenant en outre une unité d'envoi (15), qui est configurée pour :
envoyer simultanément un message de notification de voisin d'aide mutuelle à toutes les entités de charge d'aide mutuelle de la table de codage d'adresse DPM d'entité de charge ;
envoyer un message de notification de voisin de couche supérieure correspondant à l'entité de charge locale à une entité de charge de couche supérieure de la table de codage d'adresse DPM d'entité de charge ; et
envoyer un message de notification de voisin de couche inférieure correspondant à l'entité de charge locale à une entité de charge de couche inférieure de la table de codage d'adresse DPM d'entité de charge.

15. Gestionnaire de puissance dynamique selon la revendication 9, comprenant en outre :
une première unité d'interface (1101), configurée pour recevoir des informations envoyées par l'OM.

16. Gestionnaire de puissance dynamique selon la revendication 9, comprenant en outre :
une deuxième unité d'interface (1105), configurée pour une communication mutuelle entre DPM.

17. Gestionnaire de puissance dynamique selon l'une quelconque des revendications 9 à 16, dans lequel l'entité de charge est un élément de réseau sur un réseau de communication, un sous-système d'un élément de réseau, ou une carte d'un élément de réseau.

18. Gestionnaire de puissance dynamique selon la revendication 9, comprenant en outre :
une unité d'ajustement (1109), configurée pour ajuster un état de fonctionnement de l'entité de charge locale en fonction de la charge prédite de l'entité de charge locale dans la période suivante.

19. Système de communication de commande d'économie d'énergie, comprenant : un terminal d'exploitation et de maintenance OM et un gestionnaire de puissance dynamique DPM, le DPM étant configuré pour acquérir des informations de charge d'une entité de charge locale ; acquérir des informations de charge d'une entité de charge adjacente à l'entité de charge locale ; et prédire une charge de l'entité de charge locale dans une période suivante en fonction des informations de charge de l'entité de charge locale et des informations de charge de l'entité de charge adjacente à l'entité de charge locale ; l'entité de charge adjacente à l'entité de charge locale comprenant : une entité de charge d'aide mutuelle, une entité de charge de couche supérieure, et une entité de charge de couche inférieure, et l'acquisition d'informations de charge d'une entité de charge adjacente à l'entité de charge locale comprenant : la réception d'un message de notification de voisin d'aide mutuelle envoyé par une entité de charge d'aide mutuelle d'une table de codage d'adresse de gestionnaire de puissance dynamique DPM d'entité de charge, et l'obtention d'informations de charge de l'entité de charge d'aide mutuelle par traitement du message de notification de voisin d'aide mutuelle, les informations de charge comprenant : une charge courante réelle, une charge prédite, une erreur de prédiction et des informations temporelles ; la réception d'un message de notification de voisin de couche supérieure qui est envoyé par une entité de charge de couche supérieure de la table de codage d'adresse DPM d'entité de charge et qui correspond à l'entité de charge locale, et l'obtention d'informations de charge de l'entité de charge de couche supérieure par traitement du message de notification de voisin de couche supérieure ; la réception d'un message de notification de voisin de couche inférieure qui est envoyé par une entité de charge de couche inférieure de la table de codage d'adresse DPM d'entité de charge et qui correspond à l'entité de charge locale, et l'obtention d'informations de charge de l'entité de charge de couche inférieure par traitement du message de notification de voisin de couche inférieure ; et l'obtention des informations de charge de l'entité de charge adjacente à l'entité de charge locale par agrégation des informations de charge de l'entité de charge d'aide mutuelle, des informations de charge de l'entité de charge de couche supérieure et des informations de charge de l'entité de charge de couche inférieure ; et
l'OM est configuré pour effectuer une configuration d'identification de voisin pour un DPM ainsi que des opérations d'établissement, de libération et rafraîchissement, et de maintenance pour un message d'acheminement de voisin.

20. Système de communication de commande d'économie d'énergie selon la revendication 19, dans lequel le DPM est situé dans l'entité de charge, et l'entité de charge est un élément de réseau sur un réseau de communication, un sous-système d'un élément de réseau, ou une carte d'un élément de réseau.
